(19) Europäisches Patentamt
European Patent Office
Office européen des brevets

(11) **EP 3 528 144 A1**

(12) **EUROPEAN PATENT APPLICATION**

(43) Date of publication:
**21.08.2019 Bulletin 2019/34**

(51) Int Cl.:
***G06F 17/30*** *(2006.01)*

(21) Application number: **18158112.5**

(22) Date of filing: **22.02.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **20.02.2018 PT 110582**

(71) Applicant: **INESC TEC - Instituto de Engenharia de
Sistemas e
Computadores, Tecnologia e Ciência
4200-465 Porto (PT)**

(72) Inventors:
• **de Morais Sarmento, Rui Portocarrero Macedo
4200-465 Porto (PT)**
• **Cordeiro, Mário Miguel
4200-465 Porto (PT)**

(74) Representative: **Patentree
Rua de Salazares 842
4149-002 Porto (PT)**

(54) **DEVICE AND METHOD FOR KEYWORD EXTRACTION FROM A TEXT STREAM**

(57)    Device and method for extracting keywords from a text stream, comprising a streaming text input for receiving said text stream; an output for outputting a set of most relevant key words or key phrases from said text stream; a data processor configured for: taking a separate portion of text from said input for obtaining a snapshot of said text stream; preprocessing said snapshot to obtain words present in said snapshot; updating a directed graph comprising nodes and directed links, between said nodes, said links each having a direction and a weight, such that: each node corresponds to each obtained word in said snapshot and previously obtained snapshots, and each directed link corresponds to each pair of obtained words present in consecutive order in said snapshot and previously obtained snapshots, wherein the direction of the link corresponds to the word order of each pair of obtained words and the weight of the link corresponds to the number of times that each pair of obtained words is present in said word order; recalculating a link-based graph node ranking score on said graph, wherein said recalculating is limited to updated parts of said graph and to parts of said graph that are linked in the direction from said updated parts; rescaling the link-based graph node ranking score of the non-updated parts of said graph to take account of the recalculating of the score of the updated parts.

Fig. 1

**Description**

**Technical field**

The present disclosure relates to a device and method for automatic keyword extraction from text streams.

**Background**

With the explosion of large-scale document sets, it has been felt a considerable increase in the need for systems to analyse evolving and even more extensive datasets. Therefore, there is an increasing need for technologies that support automatic keyword extraction to summarize data. From enterprises' document production to the analysis of users' social networks posts, the appropriate summarizing of text brings new possibilities to better target advertising and recommendations to users. It is also used to find similarities between authors and improve enterprise department workflow.

The concept of automatic keyword extraction relies on the process of selection of words or phrases that, without human intervention, provide a clear idea about the core area of a document or set of documents. Currently, the majority of systems are prepared to be used statically.

Static methods cannot handle text that is fed by a continuous stream (streaming) as they normally require the full text to be available before being able to process the text. Furthermore, streaming text has a natural tendency to change keyword frequency along time, i.e. the keyword frequency 'floats' with context, content, subject, time, etc. making the results of a static method difficult to use along a text stream. Surely, the resulting text of a text stream could, hypothetically, be processed at the end of a text stream (if the text stream has an 'end'), but some text streams never end and, obviously, it is advantageous that streaming text be processed as it arrives.

Those prior art implementations can be classified into four classes according to [2], Rule-Based Linguistic approaches, Statistical approaches, Machine Learning approaches, and Domain-specific approaches. These approaches have their advantages and disadvantages when compared to one another. Inside each class, the approach can also be divided into supervised and unsupervised methods according to [2]. The use of human tasks or contribution in unsupervised approaches is regarded to be minimal. Otherwise, supervised approaches take into account previous annotations by humans, and their participation in finding quality keyword annotations from texts is a significant concern in these methods. According to [2] survey, there are several unsupervised approaches of interest. Among these, we can also account for two graph-based methods.

DegExt was proposed in [4], a graph-based, cross-lingual keyphrase extractor. The authors proposed a graph representation, based on a simple graph-based syntactic representation of a document, and enhanced the model by taking into account structural document features. Nonetheless, DegExt is reported to be unsuitable to a text streams environment, and is developed to be used in a static approach to text data.

A new graph-based ranking model for graphs extracted from texts, entitled "TextRank", was proposed in [3].

Document US7809548B2 also discloses a graph-based ranking model for graphs extracted from texts.

TextRank has been considered as a consistent method to automatically retrieve keywords from the text. In this method, the text corpus processing starts by the pre-processing of the text and the removal of stop words, numbers and punctuation. Then, the document goes through a process of annotation where remaining single words are categorized, for example, like nouns, verbs or adjectives among others. This method is called Part-of-Speech tagging (POS tagging). According to the authors, only a few of these annotated words are essential. The authors studied which group of words delivered best results, and they concluded that the best automatic keyphrases were obtained with nouns and adjectives. Then, with these filtered words, a graph-based approach is used. Each word is considered a graph node and the connections of words in this directed graph is determined by the order they appear in the text. The weight of these links is obtained by counting the number of times these pairs of words occur in the text corpus. The next phase of the algorithm regards the selection of the words of high importance. This is done with the use of the PageRank algorithm [5]. The words with high PageRank values are selected as potential keywords. Finally, the keyphrases are obtained with a post-processing stage. This stage involves the use of a sliding window evolving through the initial text to assess the order of words that are contained in the keyphrases or keywords. This step takes into account punctuation and other structural features of the document to retrieve reasonable keyphrases. TexRank method, as DegExt, is not prepared to do the extraction of keywords from text streams. It is a system developed to extract keywords on a static environment. Thus, it might occur that obsolete keywords that appear early in text documents are given the same or higher importance than keywords that are recent, and therefore, more important in a stream context for keyword extraction.

These facts are disclosed in order to illustrate the technical problem addressed by the present disclosure.

**General Description**

The present disclosure relates to a method for automatic keyword extraction from streams of text.

The disclosed method uses a new graph-based and incremental approach to provide a significant improvement in both running time and keywords quality in a streaming context. The increased efficiency of the disclosed invention is achieved because the method just needs to update small parts of the graph in opposition to the current gold standards that requires full graph update and do not take advantage of locality properties in the graph. Moreover, the disclosed method is able to select most relevant keywords since the disclosed method considers keywords antiquity in the text stream.

The present disclosure has some features in common to a solution reported in 2005 to update values in evolving graphs [6]. The present disclosure contributes the insight that some of the features of [6] can be used advantageously for text streams. In [6] the need to find the nodes that are affected by the changes in the graph was stressed, namely comprising three categories of nodes: 1) Nodes that are directly affected by changes in the graph, e.g., the nodes that are outgoing nodes of added or removed nodes; 2) Nodes that are indirectly affected. For example, the neighbours of the nodes in 1, and consequently their outgoing neighbours also; 3) The nodes not affected by the changes, but that have their PageRank value updated anyway, due to a simple graph scale update.

The presently disclosed incremental method presents an unexpected good performance in a big data context, overcoming the limitations of the incremental method for extraction of topics from streams of text proposed by Shin et al in [1]. Shin's method is limited to single terms, being unsuitable to extract meaningful n-grams topics or keywords in complex text streams. Moreover, the processing time required by Shin's approach is unknown since that method was not tested regarding scalability to large-scale text streams.

The disclosed method is ready for text streams and is able to select and manage keyword regarding their maturity in opposition to the TextRank algorithm. The problem of finding the most frequent items (e.g. keywords) in a data stream S of size N is the problem of discovering the elements $e_i$ whose relative frequency $f_i$ is higher than a user-specified support $\Phi_N$, with $0 \leq \Phi \leq 1$. Given the space requirements that exact algorithms addressing this problem would need, several algorithms have been proposed to find the top-K frequent elements, being roughly classified into counter-based and sketch-based [7].

Counter-based techniques keep counters for each element in the monitored set, which is usually a much smaller than the entire set of elements. When an element is identified as not currently being monitored, various algorithms take different actions to adapt the monitored set accordingly.

Sketch-based techniques provide less rigid guarantees, but they do not monitor a subset of elements, providing frequency estimators for the entire set. Simple counter-based algorithms, such as Sticky Sampling and Lossy Counting, were proposed, which process the stream in compressed size. However, these methods have the disadvantage of keeping a lot of irrelevant counters.

The Space-Saving method by Metwally [7] is, according to the present disclosure, used to maintain an updated list of keywords and it is used for automatic keyword extraction from streams of text in the method disclosed herein.

In one embodiment of the present invention, a method is provided for processing the input of a new stream of text. The text starts to be pre-processed. In the next stage, only the desired words (e.g. nouns and adjectives) are filtered.

Then, the workflow proceeds with the word graph update, considering the previous graph from previous updates, incrementally, with edge weight updates for the repetition of words sequences, and also the addition of new nodes/words if new words happen to exist in the evolving text stream.

Then, an incremental and iterative PageRank algorithm -modified to be applied incrementally to words from text streams - is used to retrieve the words that have a higher importance in the text stream.

These keywords are applied yet to a final post-processing stage of the stream to obtain a reasonable combination of keywords.

Finally, as the disclosed method does not need to accumulate unnecessary keywords from previous stream updates, and is sensitive to the occurrence of new keywords in the text stream, keywords are processed in a stage where a top-K list of keywords is maintained and updated with the space-saving algorithm, as explained in the detailed description.

The top-K algorithm application, based on landmark window, enables an efficient approach for large-scale text datasets. It focuses on the relevant keywords and discards less extracted keywords through time or keywords extracted from earlier snapshots. Those keywords might yet be included in the top-K keyword list we wish to maintain. In this embodiment, top-K representation of text data streams implies knowing the K keywords of the simulated data stream from the database of publications and received after the post-processing stage of the disclosed method.

The incremental approach presented in the disclosed method is advantageous in other types of situations as per example, used in drift concept detection of a stream of text. In this case, due to its sensitivity to change in the top-k keywords of the stream, it can be found useful in the detection of change of theme approached in a single document stream, with excellent results for detection of change of topic in microblogs like twitter posts or even for high frequency trading, regarding news of entities. Its use in conjunction with entity recognition or sentiment analysis of streams of text brings a fast adaptation and provide rapid detection of drifts within these real-time conceptual applications.

One further optimization is related to the relaxation of the incremental PageRank converging settings. It is clear that, with the change of parameters, by relaxing the convergence requirements in each PageRank recalculation, we achieve a faster convergence without decreasing the accuracy of the results significantly, while improving even further the efficiency of the software. We can do this by changing, for example, the damping factor or the convergence threshold parameters when compared to required overall convergence parameters for a static method.

Considering text streams concepts, it is also significantly essential to state that we can use fading factor in the updating of the graph and graph construction with the stream. This softens the memory needs of the software while reducing the stored terms/nodes and links/connections between terms, by removing older terms in the stored memory structures.

It is disclosed a device for extracting keywords from a text stream, comprising:

a streaming text input for receiving said text stream;
an output for outputting a set of most relevant key words or key phrases from said text stream;
a data processor configured for:

taking a separate portion of text from said input for obtaining a snapshot of said text stream;
preprocessing said snapshot to obtain words present in said snapshot;
updating a directed graph comprising nodes and directed links, between said nodes, said links each having a direction and a weight, such that:

each node corresponds to each obtained word in said snapshot and previously obtained snapshots, and each directed link corresponds to each pair of obtained words present in consecutive order in said snapshot and previously obtained snapshots, wherein the direction of the link corresponds to the word order of each pair of obtained words and the weight of the link corresponds to the number of times that each pair of obtained words is present in said word order;

recalculating a link-based graph node ranking score on said graph,
wherein said recalculating is limited to updated parts of said graph and to parts of said graph that are linked from said updated parts;
rescaling the link-based graph node ranking score of the non-updated parts of said graph to take account of the recalculating of the score of the updated parts.

In an embodiment, the data processor is further configured for outputting a set of most relevant keywords by selecting the words having highest link-based graph node ranking scores.

In an embodiment, the outputting the set of most relevant keywords comprises calculating the Top-K keywords having highest link-based graph node ranking scores.

In an embodiment, the calculating of the Top-K keywords is comprised by calculating the Top-k Space Saving method.

In an embodiment, the data processor is further configured for postprocessing the set of the most relevant keywords for obtaining a set of the most relevant key phrases from the text stream.

In an embodiment, preprocessing said snapshot to obtain words present in said snapshot comprises selecting only nouns and adjectives from said snapshot.

In an embodiment, the link-based graph node ranking method is the PageRank method.

In an embodiment, rescaling the link-based graph node ranking score of the non-updated parts of said graph comprises multiplying the previous value of the link-based graph node ranking score with a fraction between the number of graph nodes before any new graph node is added for any new word present in the obtained snapshot, and the number of graph nodes after any new graph node is added for any new word present in the obtained snapshot.

In an embodiment, the convergence requirements for each snapshot recalculating of the link-based graph node ranking score are lower than the convergence requirements for the overall text stream link-based graph node ranking score.

In an embodiment, updating the directed graph comprises:

creating a new graph node for any new word present in the obtained snapshot.

In an embodiment, updating the directed graph comprises:

creating a new directed link for any new pair of obtained words present in consecutive order in the obtained snapshot, wherein the direction of the link corresponds to the word order of the new pair of obtained words and the weight of the link is 1.

In an embodiment, updating the directed graph comprises:

updating an existing directed link for any corresponding pair of obtained words present in consecutive order in the obtained snapshot, wherein the direction of the link corresponds to the word order of the pair of obtained words and the weight of the link is increased by 1.

In an embodiment, the data processor is further configured for repeating the mentioned steps until the entire text stream to be processed has been processed.

It is also disclosed a method for extracting keywords from a text stream for outputting a set of most relevant keywords or key phrases from said text stream, comprising:

taking a separate portion of text from a streaming text input for obtaining a snapshot of said text stream;
preprocessing said snapshot to obtain words present in said snapshot;
updating a directed graph comprising nodes and directed links, between said nodes, said links each having a direction and a weight, such that:

each node corresponds to each obtained word in said snapshot and previously obtained snapshots, and each directed link corresponds to each pair of obtained words present in consecutive order in said snapshot and previously obtained snapshots, wherein the direction of the link corresponds to the word order of each pair of obtained words and the weight of the link corresponds to the number of times that each pair of obtained words is present in said word order;

recalculating a link-based graph node ranking score on said graph,
wherein said recalculating is limited to updated parts of said graph and to parts of said graph that are linked from said updated parts;
rescaling the link-based graph node ranking score of the non-updated parts of said graph to take account of the recalculating of the score of the updated parts.

It is also disclosed a non-transitory storage media including program instructions for implementing a method for extracting keywords from a text stream for outputting a set of most relevant keywords or key phrases from said text stream, the program instructions including instructions executable to carry out the method of any of the disclosed embodiments.

### Brief Description of the Drawings

The following figures provide preferred embodiments for illustrating the description and should not be seen as limiting the scope of invention.

**Figure 1** is a block diagram of a general computing environment in which the present disclosure may be practiced.

**Figure 2** is a block diagram of an embodiment of the incremental PageRank implementation and regarding the addition of a new node/term in the terms graph.

**Figure 3** is a block diagram an embodiment of considering top-k list of automatically extracted keywords, regarding the appearance of a new keyword in the stream.

**Figure 4** is a block diagram an embodiment of considering top-k list of automatically extracted keywords, regarding the repetition of an already registered keyword in the stream.

**Figure 5** regards an input example of a stream of text, with two snapshots.

**Figure 6** is regarding the update of the affected terms' incremental PageRank, after the stream of text in previous figure.

**Figure 7** presents efficiency results with the Reuters News Dataset for both TextRank algorithm and the disclosed method.

**Figure 8** illustrates a sequence of steps of an embodiment of the disclosure (a) and preferred embodiment with Space-saving Top-K (b).

**Figure 9** illustrates a sequence of steps of an embodiment of the incremental and iterative processing for each new snapshot received.

**Figure 10** illustrates a sequence of steps of an embodiment of the Space-saving Top-K processing applied to the modified PageRank output.

**Detailed Description**

The present disclosure relates to method for automatic keyword extraction streams of text.

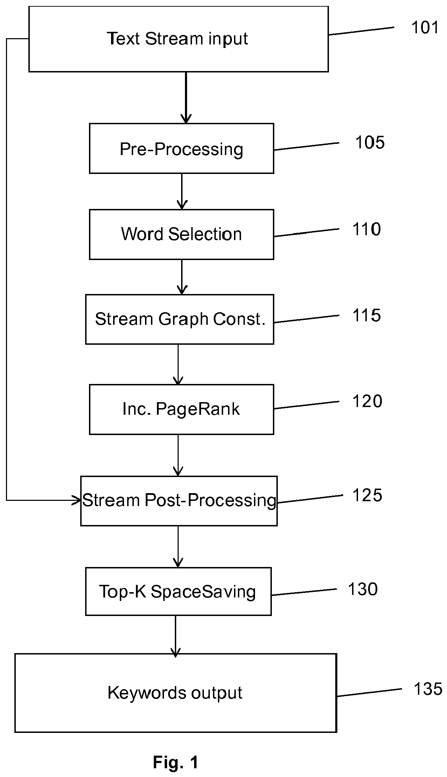

In Figure 1, a general computing environment in which the present invention may be practiced is shown.

The input of text or the text stream 101, which may be independent chunks of terms in written sentences, is pre-processed 105 in snapshots, i.e. portions of text obtained from separating the input text stream. This separating into portions may be deterministic (e.g. a portion may be a sentence, a paragraph, a piece of news, a part of dialog from the same speaker, a fixed number of sentences or phrases, among other ways). The pre-processing step 105 accounts with preferably all the pre-processing of each snapshot in the stream. This includes the use of BOW (bag of words) and the removal of stopwords, numbers, punctuation and other operations with the terms that do not add information to the text mining tasks. Step 110 is related to the POS tagging of remaining terms from previous steps 101 and 105. In this step, we select only nouns and adjectives.

Step 115 regards the construction or update of the graph with the addition of new terms or the update of the weight of the links between the terms extracted after step 105. Step 120 is related to the process of incrementally updating the PageRank values of the terms of the graph from step 115.

Step 125 regards the post-processing stage of the disclosed method where there is an ordering of the words that form keywords or keyphrases about the order and punctuation of the text in 101.

Step 130 is the next step and is related to the Space Saving algorithm that maintains a list of counters of keywords extracted from previous steps. This list is updated and reordered according to the Space Saving algorithm.

The final step 135, is the final step and the output of the disclosed method and is the maintained list of top-k keywords or keyphrases. This figure represents the steps involved in the flow of data. It is noted that these steps are repeated for each received snapshot.

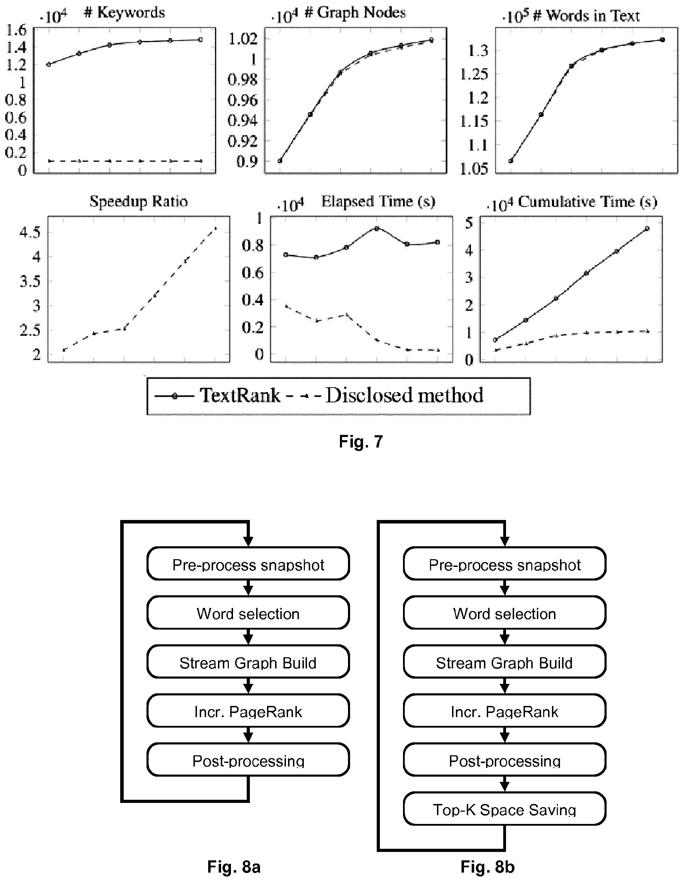

Figure 8 illustrates a sequence of steps of an embodiment of the disclosure (a) and of a preferred embodiment with Space-saving Top-K (b). This figure represents the steps involved in the flow of activities, which illustrate how the method is iterated for each received snapshot of text. Advantageously, the method may be parallelized, for example by pipeline processing of each of the activities in Fig. 8 by a specific processor, core, process, and/or thread.

Terms and words are used interchangeably in the present disclosure.

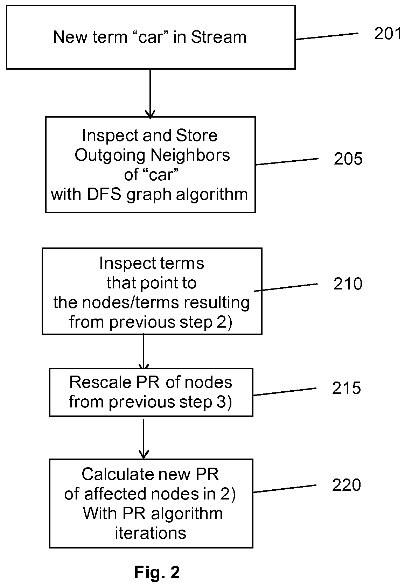

Figure 2 presents the workflow of the incremental PageRank phase of the disclosed method.

Step 201 regards the input of a new term previously unknown in the graph of nouns and adjectives and their respective links.

Step 205 is the workflow step of the incremental PageRank phase, in the directed graph previously updated in step 201. It regards the search for the outgoing neighbours of the new term with the DFS (Depth First Search) algorithm. This results in finding the outgoing node neighbours of the new term in the stream. Step 210 is the phase that regards the search for the terms that have a direct link towards the terms encountered in the previous step.

After the previous step 210, 215 is related to the rescaling of the terms PageRank values, and this is typically made by multiplying the previous value with the fraction between the number of nodes in the graph before the appearance of the new term(s), and the number of nodes/terms in the graph after the addition of the term(s).

Step 220 is the final step and regards the need recalculate the PageRank values of the affected nodes due to the reason of these nodes having outgoing links. Because of that, the update of the incremental PageRank value changes the values of outgoing neighbours. This procedure is done with the incremental PageRank iterative procedure until sufficient convergence of the values is obtained, see [6].

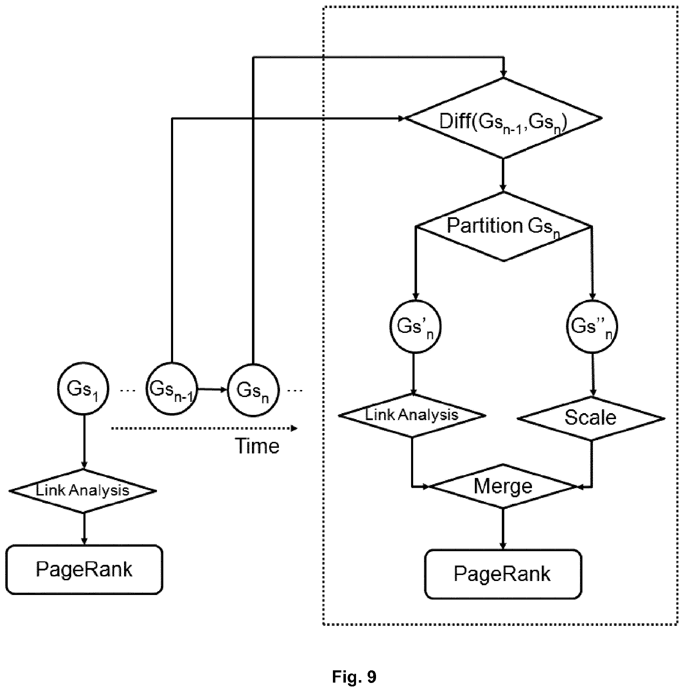

Figure 9 shows the steps involved according to a more general embodiment of the incremental PageRank phase of the disclosed method. After an initial calculation of the graph (Gs1) and PageRank for an initial text snapshot, the method is then repeated incrementally as new text snapshots arrive. The snapshot is processed to detect new terms in comparison with the existing directed graph. The outgoing node neighbours of the new term in the stream are then selected for a recalculation of the PageRank value (terms that have a direct link towards the new terms encountered in the previous step).Terms that are not selected, are rescaled to account for the new term PageRank values. This is typically made by multiplying the previous value with the fraction between the number of nodes in the graph before the appearance of the new term(s), and the number of nodes/terms in the graph after the addition of the term(s). The final step regards the need recalculate the PageRank values of the affected nodes due to the reason of these nodes having outgoing links. Because of that, the update of the incremental PageRank value changes the values of outgoing neighbours. This procedure is done with the incremental PageRank iterative procedure until sufficient convergence of the values is obtained.

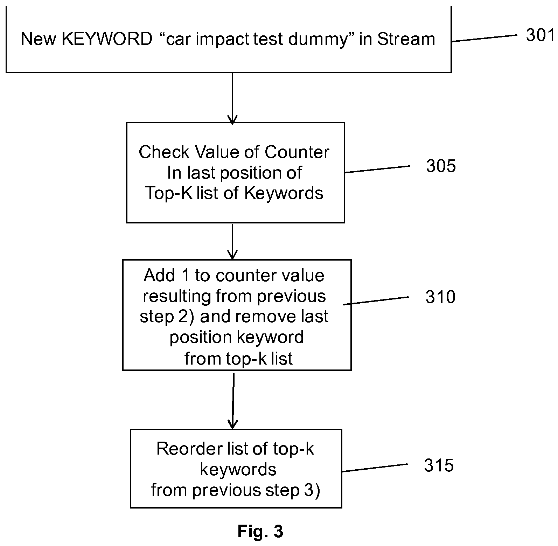

Figure 3 presents the workflow of the top-k Space Saving phase of the disclosed method. Step 301 regards the input of a new keyword previously unknown in the list of keywords. Step 305 is the workflow step of the search for a keyword with the last position of the list or minimum counter value in the list. The step 310 comprises the addition of 1 to the counter of the element found in step 305. After the previous step 310, 315 is related to the reordering of the keywords list.

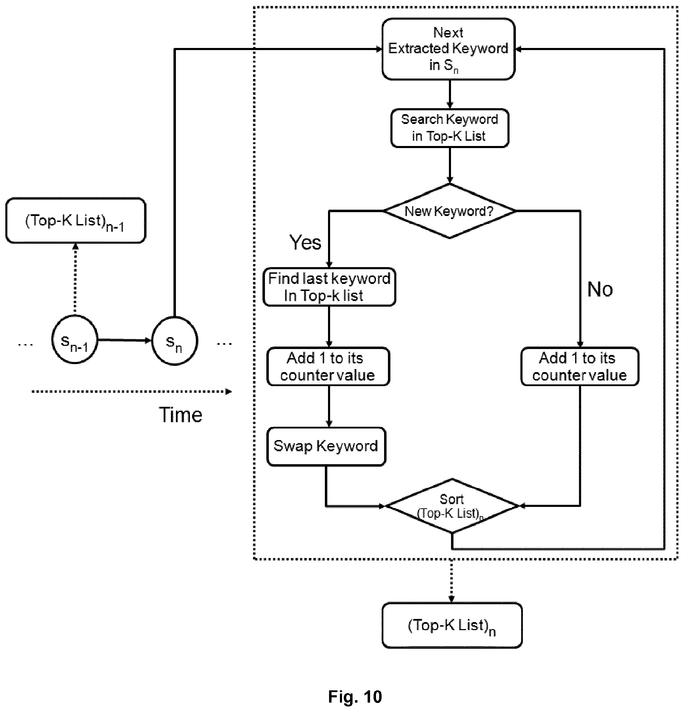

Figure 10 shows the steps involved according to a more general embodiment of the top-k Space Saving. The input of a new keyword previously unknown in the list of keywords causes the search for a keyword with the last position of the list or minimum counter value in the list. Next, 1 is added to the counter of the element found and the new keyword and the searched keyword are swapped. If the keyword already exists, 1 is added to the counter. After the previous steps, the list is re-ordered.

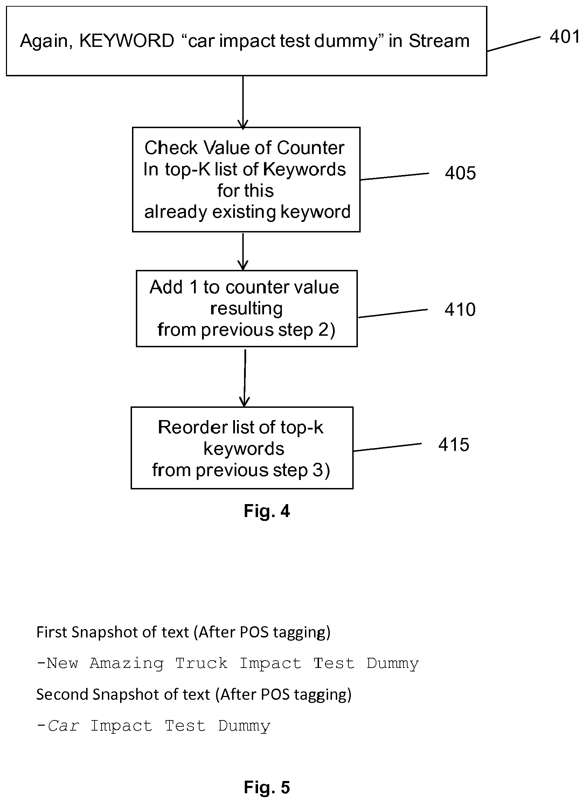

Figure 4 presents the workflow of the top-k Space Saving phase of the disclosed method. Step 401 regards the input of an already registered keyword previously known in the list of keywords. Step 405 is the workflow step of the search for a keyword and its counter value in the list. The step 410 comprises the addition of 1 to the counter of the element found in step 405. After the previous step 410,415 is related to the reordering of the keywords list, taking into account the counter values.

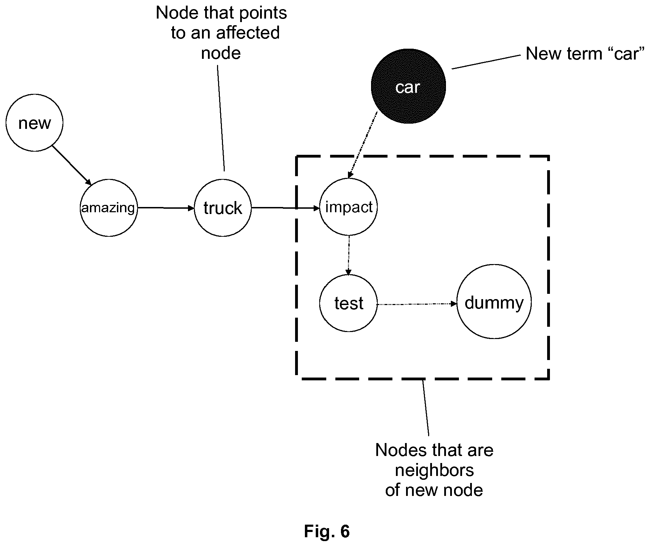

Figure 5 shows an example of an input stream. The term "Car" is a new term added to the graph, in the second snapshot of the input stream of text. Therefore, we need to recalculate PR values of graph considering changes in graph, locally around the new term (see figure 6).

Figure 6 shows a small network with the example text stream in Figure 5. Changes in the graph are represented by added node "car". With the addition of a new term in graph, all the directed $n^{th}$ order outgoing neighbours will be affected, i.e., "impact", "test" and "dummy". These terms' PageRank values will have to be recalculated. As we have, in this example, a node that points to these nodes/terms ("truck"), we will need also to know the rescaled value for this term, so we can recalculate all the affected nodes PageRank values in graph.

The efficiency of the method disclosed herein was assessed using the TextRank algorithm as a benchmark. In the following paragraph the methodology underlying the comparison tests and the results obtained for both the disclosed method and TextRank are presented. The metrics used to compare the algorithms regarding obtained keywords or keyphrases are also described.

For that purpose, a publicly available dataset was used [8], which comprises a high amount of information including Reuters news and also several articles extracted from Blogs. The data contains articles titles, content, type of publication (which might include news or Blog posts), the source institution and also date and time of publishing. The high quality and high organization of this structured data make it a good source for text mining or Natural Language Processing (NLP) tasks. All Reuters news from the $1^{st}$ to the $30^{th}$ of September 2015 were selected, which correspond to 400 news articles. Regarding the used text, we could choose between the news Titles or the news content to analyse. We choose the news content in all our studies.

For qualitative measurements, R&D publications from Czech Republic researchers were selected from a dataset publicly available in [9]. This is a complete source of information, and there was information for dozens of years starting from around 1985 until 2015. This dataset provides annotated keywords for each publication. During 2015, while this dataset was publicly available, we exported the data for several years, we selected conference papers and book chapters only. Therefore, the number of publications was reduced from around 25000 to 5110 publications.

The disclosed method was evaluated in an incremental setup and compared with the TextRank algorithm, regarding Processing Efficiency and also Quality for the extraction of keywords.

Results for the disclosed method was obtained from several increments of text news, compared with the TextRank, which is a batch algorithm. The disclosed method was tested regarding efficiency in an incremental setting configuration and TextRank results served as a baseline. In this setup, 6 snapshots of news were considered. In total, the first 20 days of September 2015, corresponding to 300 news articles, were passed as input. The snapshots were built by aggregating publications on a daily basis, by using the timestamps available in the dataset. In the Batch algorithm, for every snapshot, the keywords were extracted having all daily news since the day 1 to the current day as input. For the incremental algorithm, in the first snapshot it receives only 15 days of news articles as input. In the following snapshots, the algorithm only receives the set of publications text added to the corpus in that particular day snapshot (incremental). The empirical evaluation performed consisted mainly of comparing run times of each increment (duration of each increment and cumulative execution time) for both TextRank and the disclosed method. Additionally, the size of the corpus (number of unique words), and the total number of extracted keywords for each snapshot was also registered. Note that the TextRank will always need to extract keywords for all the text, while the method disclosed herein only performs calculations and keyword extraction for the current snapshot, and particularly for the words affected. Nonetheless, as previously explained, the disclosed method takes into account graph and corpus information from previous snapshots. In the end, an analysis of the total speed-up ratio obtained in each of the steps is added.

Regarding qualitative results, we used the Czech Republic R&D Dataset with annotated keywords. For this purpose, we selected only articles in proceedings, for 2013. Then, we aggregated the publications by month, in 12 snapshots. For this amount of publications, we selected the abstracts for our automatic keyword extraction tasks. On average, the abstracts have 240 words. Finally, we calculated the 12 measures of similarity between annotated and extracted keywords for the disclosed method and the TextRank method. We use a similarity measure to compare the author's keywords and the model results for keywords extraction.

This similarity measurement is more appropriated to test unsupervised keyword extraction algorithms. For example, imagine if we had the annotated keyword "car maintenance" for a text. Additionally, we automatically extracted the keywords "car washing" or "car cleaning" from the text. In this situation, if we used Precision, Recall and F measure we would have no idea that the extraction algorithm is, in fact, extracting concept keywords that are not that much far from the annotated keywords. Thus, by decomposing n-gram keywords we can detect these normal situations when we are dealing with annotated keywords. Particularly for this example, we would have a value of similarity of:

$$similarity_{K,M} = \frac{common^2}{c(w_K) * c(w_M)} = \frac{1^2}{2*2} = \frac{1}{4} = 0.25$$

where common is the intersection of both groups, i.e., the number of words that appear in both the results and the keywords. The total number of words the author's keywords group has and the method provides are respectively represented by $c(w_K)$ and $c(w_M)$. For all the experimentation and development, we used an Intel R Core™ i7-7700HQ CPU @ 2.80GHz x 8 processors computer with 16 GBytes of RAM, SSD HDD, and Ubuntu 16.04.3 LTS 64-bit OS. Three runs per algorithm were performed. The values presented in the following charts in this paper are the average values of those three runs.

The disclosed method is compared with the Batch version of TextRank. The comparisons regard qualitative measurements and efficiency.

Figure 7 shows the results for the Reuters News data. From "#Graph Nodes" and "#Words in Text" we can, as expected, conclude that the number of TextRank graph nodes is similar for the method disclosed and TextRank. Figure 7 (#Extracted Keywords) shows that TextRank retrieves a growing number of keywords while our streaming implementations retrieve the top-1000 keywords. Figure 7 (Elapsed Time) shows that both algorithms have variable elapsed time for each of the iterations. Nonetheless, the disclosed method has a clear decreasing elapsed time compared to TextRank, which tends to increase elapsed time as the quantity of the data increases. Otherwise, the disclosed method tends to achieve much lower values for elapsed time. For example, on iteration 4, the disclosed method takes around 100 seconds to perform the same incoming data processing, and the batch version takes approximately 900 seconds. Figure 7 (Cumulative Time) shows a clear advantage of using the disclosed method regarding total elapsed time/cumulative time when the data is growing, and there is a need to analyse all data since day 1. In the last iteration, the disclosed method takes around 10000 seconds to process all the 20 days of data. Otherwise, if we used TextRank algorithm to recurrently process all the data and also the incoming text, it would take almost 50000 seconds to achieve results. Figure 7 (Speedup Ratio) shows that the disclosed method presents growing and significant speedups when cumulative time was compared with the. At the end of the stream, i.e., the last iteration, the disclosed method achieves a speedup of almost 5 times the speed of processing provided by TextRank algorithm. For the more general case, the speed-up always increases with iterations, as the disclosed method "learns" the word structure from the text stream, such that only incrementally smaller changes are required. As the number of iterations increases, the time taken for each iteration decreases, tending to a minimum value.

Regarding processing efficiency, it is clear that if the TextRank user is dealing with streaming data, the disclosed incremental method offers a significant performance improvement. Still, regarding cumulative time, the incremental method disclosed herein has a learning curve. Thus, as the data arrives and the graph construction and update happen, the algorithm will eventually need fewer updates of graph structure in the future. This typically results in a logarithmic type of cumulative time curve. This is the result of less and less needed addition of nodes, resulting in the need to only update the weight of edges between nodes, i.e. the counting of words pairs. Regarding qualitative results, the method disclosed presented higher quality, i.e. higher similarity values considering ground truth annotated keywords, regarding the extracted keywords when compared to TextRank. Additionally, the effect of increasing K in this top-K approach would increase the quality results as it is expected that, in Table 1, as the annotated keywords amount increase we continue to test only 1000 keywords extracted with the algorithms. Accordingly, in Table 1, the quality values decrease due to this characteristic, approximately after iteration 8, until the end of the stream, and for all algorithms.

Regarding qualitative comparison, the Table 1 shows the similarity values between extracted keywords and accumulated annotated keywords as the abstracts text data evolves. We selected the top-1000 keywords of TextRank, regarding keyword weight. Therefore, we compare the similarity values for these 1000 keywords obtained from TextRank and the disclosed method. To measure the sensitivity to capture recent keywords we repeat the test, but this time we measure the similarity of extracted keywords with each snapshot annotated keywords.

These results are presented in Table 2 and this way we can measure the sensibility of all algorithms to the current keywords in the stream. In both Table 1 and Table 2, the disclosed method presents higher similarity average than TextRank algorithm. This is even more pronounced in sensitivity (Table 2). It should also be noted, that the maximum similarity values for the disclosed method are obtained in the last snapshots. This is explained by the higher sensibility of the disclosed method to more recent keywords.

**TABLE 1**

| Algorithm | Avg. | Sd | iter1 | iter2 | iter3 | inter4 | iter5 | iter6 | iter7 | iter8 | iter9 | iter10 | iter11 1 | iter12 |
|---|---|---|---|---|---|---|---|---|---|---|---|---|---|---|
| **Batch** | 0.168 | 0.108 | **0.023** | 0.025 | 0.032 | 0.067 | 0.130 | 0.254 | 0.308 | 0.300 | 0.260 | **0.218** | 0.204 | **0.193** |
| **Incremental** | **0.198** | **0.125** | 0.0 11 | **0.046** | **0.046** | **0.124** | **0.189** | **0.308** | **0.350** | **0.398** | **0.304** | 0.217 | **0.206** | 0.181 |

**TABLE 2**

| Algorithm | Avg. | Sd | iter1 | iter2 | iter3 | iter4 | iter5 | iter6 | iter7 | iter8 | iter9 | inter10 | iter11 | iter12 |
|---|---|---|---|---|---|---|---|---|---|---|---|---|---|---|
| **Batch** | 0.160 | 0.118 | **0.023** | 0.008 | 0.003 | 0.026 | 0.086 | 0.221 | 0.280 | 0.254 | 0.267 | 0.250 | 0.270 | 0.235 |
| **Incremental** | **0.254** | **0.181** | 0.011 | 0.032 | **0.023** | **0.105** | **0.133** | **0.311** | **0.331** | **0.480** | **0.336** | **0.371** | **0.425** | **0.487** |

EP 3 528 144 A1

The term "comprising" whenever used in this document is intended to indicate the presence of stated features, integers, steps, components, but not to preclude the presence or addition of one or more other features, integers, steps, components or groups thereof.

Flow diagrams of particular embodiments of the presently disclosed methods are depicted in figures. The flow diagrams do not depict any particular means, rather the flow diagrams illustrate the functional information one of ordinary skill in the art requires to perform said methods required in accordance with the present disclosure.

It will be appreciated by those of ordinary skill in the art that unless otherwise indicated herein, the particular sequence of steps described is illustrative only and can be varied without departing from the disclosure. Thus, unless otherwise stated the steps described are so unordered meaning that, when possible, the steps can be performed in any convenient or desirable order.

The disclosure should not be seen in any way restricted to the embodiments described and a person with ordinary skill in the art will foresee many possibilities to modifications thereof.

The above described embodiments are combinable.

The following claims further set out particular embodiments of the disclosure.

References:

[1] Shin, Y., Ryo, C. Y., and Park, J. (2014). Automatic extraction of persistent topics from social text streams. World Wide Web, 17(6):1395-1420.

[2] Siddiqi, S. and Sharan, A. (2015). Keyword and keyphrase extraction techniques: A literature review. International Journal of Computer Applications, 109(2):18-23.

[3] Mihalcea, R. and Tarau, P. (2004). TextRank: Bringing order into texts. In Proceedings of EMNLP 2004 Conference on Empirical Methods in Natural Language Processing

[4] Litvak, M., Last, M., Aizenman, H., Gobits, I., and Kandel, A. (2011). DegExt - A Language- Independent Graph-Based Keyphrase Extractor, pages 121-130. Springer Berlin Heidelberg, Berlin, Heidelberg.

[5] Page, L., Brin, S., Motwani, R., and Winograd, T. (1998). The pagerank citation ranking: Bringing order to the web. In Proceedings of the 7th International World Wide Web Conference, pages 161-172, Brisbane, Australia.

[6] Desikan, P., Pathak, N., Srivastava, J., and Kumar, V. (2005). Incremental page rank computation on evolving graphs. In Special Interest Tracks and Posters of the 14th International Conference on World Wide Web, WWW '05, pages 1094-1095, New York, NY, USA. ACM.

[7] Metwally, A., Agrawal, D., and El Abbadi, A. (2005). Efficient computation of frequent and top-k elements in data streams. In Proceedings of the 10th International Conference on Database Theory, ICDT'05, pages 398-412, Berlin, Heidelberg. Springer-Verlag.

[8] Corney, D., Albakour, D., Martinez, M., and Moussa, S. (2016). What do a million news articles look like? In Proceedings of the First International Workshop on Recent Trends in News Information Retrieval co-located with 38th European Conference on Information Retrieval (ECIR 2016), Padua, Italy, March 20, 2016., pages 42-47.

[9] RDICCR (2015). Published data from r&d is of the czech republic - research, development and in- novation council of the czech republic (rdiccr). http://www.isvav.cz/. Accessed: 2015-09-30.

**Claims**

1. Device for extracting keywords from a text stream, comprising

   a streaming text input for receiving said text stream;

   an output for outputting a set of most relevant key words or key phrases from said text stream;

   a data processor configured for:

      taking a separate portion of text from said input for obtaining a snapshot of said text stream;

      preprocessing said snapshot to obtain words present in said snapshot;

      updating a directed graph comprising nodes and directed links between said nodes, said links each having a direction and a weight, such that:

         each node corresponds to each obtained word in said snapshot and previously obtained snapshots, and each directed link corresponds to each pair of obtained words present in consecutive order in said snapshot and previously obtained snapshots, wherein the direction of the link corresponds to the word order of each pair of obtained words and the weight of the link corresponds to the number of times that each pair of obtained words is present in said word order;

recalculating a link-based graph node ranking score on said graph,
wherein said recalculating is limited to updated parts of said graph and to parts of said graph that are linked from said updated parts;
rescaling the link-based graph node ranking score of the non-updated parts of said graph to take account of the recalculating of the score of the updated parts.

**2.** Device according to the previous claim wherein the data processor is further configured for outputting a set of most relevant keywords by selecting the words having highest link-based graph node ranking scores.

**3.** Device according to the previous claim wherein the outputting the set of most relevant keywords comprises calculating the Top-K keywords having highest link-based graph node ranking scores.

**4.** Device according to the previous claim wherein the calculating of the Top-K keywords is comprised by calculating the Top-k Space Saving method.

**5.** Device according to according to any of the claims 2-4 wherein the data processor is further configured for post-processing the set of the most relevant keywords for obtaining a set of the most relevant key phrases from the text stream.

**6.** Device according to any of the previous claims wherein preprocessing said snapshot to obtain words present in said snapshot comprises selecting only nouns and adjectives from said snapshot.

**7.** Device according to any of the previous claims wherein the link-based graph node ranking method is the PageRank method.

**8.** Device according to any of the previous claims wherein rescaling the link-based graph node ranking score of the non-updated parts of said graph comprises multiplying the previous value of the link-based graph node ranking score with a fraction between the number of graph nodes before any new graph node is added for any new word present in the obtained snapshot, and the number of graph nodes after any new graph node is added for any new word present in the obtained snapshot.

**9.** Device according to any of the previous claims wherein the convergence requirements for each snapshot recalculating of the link-based graph node ranking score are lower than the convergence requirements for the overall text stream link-based graph node ranking score.

**10.** Device according to any of the previous claims wherein updating the directed graph comprises:

creating a new graph node for any new word present in the obtained snapshot.

**11.** Device according to any of the previous claims wherein updating the directed graph comprises:

creating a new directed link for any new pair of obtained words present in consecutive order in the obtained snapshot, wherein the direction of the link corresponds to the word order of the new pair of obtained words and the weight of the link is 1.

**12.** Device according to any of the previous claims wherein updating the directed graph comprises:

updating an existing directed link for any corresponding pair of obtained words present in consecutive order in the obtained snapshot, wherein the direction of the link corresponds to the word order of the pair of obtained words and the weight of the link is increased by 1.

**13.** Device according to any of the previous claims wherein the data processor is further configured for repeating the claimed steps until the entire text stream to be processed has been processed.

**14.** Method for extracting keywords from a text stream for outputting a set of most relevant keywords or key phrases from said text stream, comprising:

taking a separate portion of text from a streaming text input for obtaining a snapshot of said text stream;
preprocessing said snapshot to obtain words present in said snapshot;
updating a directed graph comprising nodes and directed links, between said nodes, said links each having a direction and a weight, such that:

each node corresponds to each obtained word in said snapshot and previously obtained snapshots, and each directed link corresponds to each pair of obtained words present in consecutive order in said snapshot and previously obtained snapshots, wherein the direction of the link corresponds to the word order of each pair of obtained words and the weight of the link corresponds to the number of times that each pair of obtained words is present in said word order;

recalculating a link-based graph node ranking score on said graph, wherein said recalculating is limited to updated parts of said graph and to parts of said graph that are linked from said updated parts;
rescaling the link-based graph node ranking score of the non-updated parts of said graph to take account of the recalculating of the score of the updated parts.

15. Non-transitory storage media including program instructions for implementing a method for extracting keywords from a text stream for outputting a set of most relevant keywords or key phrases from said text stream, the program instructions including instructions executable to carry out the method of any of the previous claims.

| | |
|---|---|
| Text Stream input | 101 |
| Pre-Processing | 105 |
| Word Selection | 110 |
| Stream Graph Const. | 115 |
| Inc. PageRank | 120 |
| Stream Post-Processing | 125 |
| Top-K SpaceSaving | 130 |
| Keywords output | 135 |

**Fig. 1**

New term "car" in Stream — 201

Inspect and Store
Outgoing Neighbors
of "car"
with DFS graph algorithm — 205

Inspect terms
that point to
the nodes/terms resulting
from previous step 2) — 210

Rescale PR of nodes
from previous step 3) — 215

Calculate new PR
of affected nodes in 2)
With PR algorithm
iterations — 220

**Fig. 2**

New KEYWORD "car impact test dummy" in Stream ——— 301

Check Value of Counter
In last position of
Top-K list of Keywords ——— 305

Add 1 to counter value
resulting from previous
step 2) and remove last
position keyword
from top-k list ——— 310

Reorder list of top-k
keywords
from previous step 3) ——— 315

**Fig. 3**

Again, KEYWORD "car impact test dummy" in Stream — 401

Check Value of Counter
In top-K list of Keywords
for this
already existing keyword — 405

Add 1 to counter value
resulting
from previous step 2) — 410

Reorder list of top-k
keywords
from previous step 3) — 415

**Fig. 4**

First Snapshot of text (After POS tagging)

```
-New Amazing Truck Impact Test Dummy
```

Second Snapshot of text (After POS tagging)

```
-Car Impact Test Dummy
```

**Fig. 5**

Node that points
to an affected
node

New term "car"

new

amazing

truck

impact

car

test

dummy

Nodes that are
neighbors
of new node

**Fig. 6**

Fig. 7

Fig. 8a                                    Fig. 8b

**Fig. 9**

**Fig. 10**

Europäisches
Patentamt

European
Patent Office

Office européen
des brevets

# EUROPEAN SEARCH REPORT

Application Number

EP 18 15 8112

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BAHMAN BAHMANI ET AL: "Fast Incremental and Personalized PageRank", ARXIV.ORG, CORNELL UNIVERSITY LIBRARY, 201 OLIN LIBRARY CORNELL UNIVERSITY ITHACA, NY 14853, 15 June 2010 (2010-06-15), XP080483533, DOI: 10.14778/1929861.1929864 * the whole document * | 1-15 | INV. G06F17/30 |
| X | CHARU AGGARWAL ET AL: "Evolutionary Network Analysis", ACM COMPUTING SURVEYS, ACM, NEW YORK, NY, US, US, vol. 47, no. 1, 1 May 2014 (2014-05-01), pages 1-36, XP058049871, ISSN: 0360-0300, DOI: 10.1145/2601412 * the whole document * | 1-15 | |
| X | BAHMAN BAHMANI ET AL: "PageRank on an evolving graph", KNOWLEDGE DISCOVERY AND DATA MINING, ACM, 2 PENN PLAZA, SUITE 701 NEW YORK NY 10121-0701 USA, 12 August 2012 (2012-08-12), pages 24-32, XP058007680, DOI: 10.1145/2339530.2339539 ISBN: 978-1-4503-1462-6 * the whole document * | 1-15 | TECHNICAL FIELDS SEARCHED (IPC) G06F |
| X,D | MIHALCEA ET AL: "TextRank: Bringing Order into Texts", PROCEEDINGS OF THE 2004 CONFERENCE ON EMPIRICAL METHODS IN NATURAL LANGUAGE PROCESSING, 25 July 2004 (2004-07-25), pages 404-411, XP055470796, * the whole document * | 1-15 | |

The present search report has been drawn up for all claims

| Place of search | Date of completion of the search | Examiner |
|---|---|---|
| The Hague | 26 April 2018 | Denoual, Matthieu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

### Patent documents cited in the description

- US 7809548 B2

### Non-patent literature cited in the description

- **SHIN, Y. ; RYO, C. Y. ; PARK, J.** Automatic extraction of persistent topics from social text streams. *World Wide Web,* 2014, vol. 17 (6), 1395-1420
- **SIDDIQI, S. ; SHARAN, A.** Keyword and keyphrase extraction techniques: A literature review. *International Journal of Computer Applications,* 2015, vol. 109 (2), 18-23
- **MIHALCEA, R. ; TARAU, P.** TextRank: Bringing order into texts. *Proceedings of EMNLP 2004 Conference on Empirical Methods in Natural Language Processing,* 2004
- **LITVAK, M. ; LAST, M. ; AIZENMAN, H. ; GOBITS, I. ; KANDEL, A.** DegExt - A Language- Independent Graph-Based Keyphrase Extractor. Springer, 2011, 121-130
- **PAGE, L. ; BRIN, S. ; MOTWANI, R. ; WINOGRAD, T.** The pagerank citation ranking: Bringing order to the web. *Proceedings of the 7th International World Wide Web Conference,* 1998, 161-172
- Incremental page rank computation on evolving graphs. **DESIKAN, P. ; PATHAK, N. ; SRIVASTAVA, J. ; KUMAR, V.** Special Interest Tracks and Posters of the 14th International Conference on World Wide Web, WWW '05. ACM, 2005, 1094-1095
- Efficient computation of frequent and top-k elements in data streams. **METWALLY, A. ; AGRAWAL, D. ; EL ABBADI, A.** Proceedings of the 10th International Conference on Database Theory, ICDT'05. Springer-Verlag, 2005, 398-412
- **CORNEY, D. ; ALBAKOUR, D. ; MARTINEZ, M. ; MOUSSA, S.** What do a million news articles look like?. *Proceedings of the First International Workshop on Recent Trends in News Information Retrieval co-located with 38th European Conference on Information Retrieval (ECIR 2016),* 20 March 2016, 42-47
- r&d is of the czech republic - research, development and in- novation council of the czech republic (rdiccr). *RDICCR,* 2015, http://www.isvav.cz